# EUROPEAN PATENT SPECIFICATION

(11) **EP 3 921 186 B1**
(45) Date of publication and mention of the grant of the patent: **26.10.2022**
(21) Application number: 20707811.4
(22) Date of filing: 04.02.2020
(51) Int. Cl.: B60C 15/00, B60C 5/14, B60C 23/04, B60C 15/06, G06K 19/077, B29D 30/00

(54) **PNEUMATIC TYRE EQUIPPED WITH A TRANSPONDER**
MIT EINEM TRANSPONDER AUSGESTATTETER LUFTREIFEN
BANDAGE PNEUMATIQUE ÉQUIPÉ D'UN TRANSPONDEUR

(30) Priority: 04.02.2019 IT 201900001565
(43) Date of publication of application: 15.12.2021
(73) Proprietor: Bridgestone Europe NV/SA, 1932 Zaventem (BE)
(72) Inventor: PEDRINELLI, Marco, 00128 Roma (IT); SABETTI, Emiliano, 00128 Roma (IT); MIRABILE, Mauro, 00128 Roma (IT); ROSA, Emanuele, 00128 Roma (IT)
(74) Representative: Maccagnan, Matteo
(86) International application number: PCT/IB2020/050870
(87) International publication number: WO 2020/161616

(56) References cited:
- KR-A- 20100 082 464
- KR-A- 20130 067 944
- US-A1- 2007 144 640

## Description

### CROSS-REFERENCE TO RELATED APPLICATIONS

This patent application claims priority from Italian patent application no. 102019000001565 filed on 04/02/2019.

### TECHNICAL SECTOR

The present invention relates to a pneumatic tyre equipped with a transponder.

### PRIOR ART

In recent years, so-called "*smart*" pneumatic tyres have emerged, which are capable of forming an active part of modern vehicles, supplying information concerning the type of pneumatic tyres mounted, information concerning the status of the pneumatic tyres and also information concerning ambient conditions.

A "smart" pneumatic tyre is normally equipped with a transponder (that is, an electronic device suitable for communicating in radio frequency) which permits remote communication (that is, to both the vehicle on which the tyre is mounted and to an operator who must carry out the checking or the replacement of the pneumatic tyre) of the identification, the characteristics and the history of the pneumatic tyre.

Recently, the unification has been proposed of RFID *("Radio-Frequency IDentification")* technology, based upon the presence of transponders, and TPMS *("Tyre Pressure Monitoring Systems")* technology, which measures the effective inflation pressure in order to memorize, within transponders, the effective inflation pressure and then remotely communicate the effective inflation pressure by means of the transponders themselves.

Initially, it was proposed to glue a transponder onto the inner surface or onto the external surface of a sidewall of a pneumatic tyre; this solution is extremely simple from a design perspective and is applicable also to existing pneumatic tyres; however, by contrast, it does not guarantee that the transponder will not detach from the pneumatic tyre (especially when it is glued to the external surface) following the cyclical deformations to which the sidewall of a pneumatic tyre is subjected.

Thereafter, the integration of a transponder within the structure of a pneumatic tyre was proposed, that is, within the interior of the various layers that make up the pneumatic tyre.

The patent application US20080289736A1 describes a pneumatic tyre wherein a transponder is integrated into the structure of the pneumatic tyre at the bead; in particular the transponder is arranged between a sidewall and a bead filler above the flap of the body ply.

The patent application EP2186658A1 describes a pneumatic tyre wherein a transponder is integrated into the structure of the pneumatic tyre at the bead; in particular the transponder is arranged between a sidewall and a bead filler above the flap of the body ply, or else the transponder is arranged between a bead filler and the body ply (i.e., within the flap of the body ply).

The patent application EP1366931A2 describes a pneumatic tyre wherein a transponder is integrated into the structure of the pneumatic tyre at the bead; in particular the transponder is immersed within the bead filler and is located in the interior of the flap of the body ply or the transponder is immersed within the rubber arranged more to the inside of the bead core (therefore, it is located on the exterior of the flap of the body ply).

The patent applications KR20100082464A1 and KR20130067944A1 describe a pneumatic tyre wherein a transponder is integrated into the structure of the pneumatic tyre above the bead core; in particular, the transponder is embedded (inserted) within the body ply and is located at least partially within the flap of the body ply.

Nevertheless, the above-described positionings of the transponder within a pneumatic tyre are not ideal, because they do not make it possible to minimize the stresses and deformations to which the transponder is subjected (both during the construction of the pneumatic tyre and during the use of the pneumatic tyre) and, at the same time, to minimize transponder radio frequency communications disturbances and interference.

### DESCRIPTION OF THE INVENTION

The aim of the present invention is to provide a pneumatic tyre equipped with a transponder that is free from the disadvantages described above and that is, in particular, easy and inexpensive to implement.

According to the present invention, a pneumatic tyre equipped with a transponder is provided, as set forth in the appended claims.

The claims describe preferred embodiments of the present invention forming an integral part of the present description.

### BRIEF DESCRIPTION OF THE DRAWINGS

The present invention is now described with reference to the attached drawings, which illustrate several non-limiting exemplary embodiments, wherein:
- Figure 1 is a schematic cross section, with parts removed for clarity, of a pneumatic tyre manufactured according to the present invention;
- Figure 2 is a schematic view of a transponder of the pneumatic tyre of Figure 1;
- Figures 3 and 4 are two views in cross section of the transponder of Figure 2 according to the section line III-III and according to the section line IV-IV, respectively;
- Figure 5 is an enlarged scale view of a detail of Figure 1; and
- Figure 6 is a schematic view that shows the arrangement of the transponder of Figure 2 with respect to an edge of the body ply of the pneumatic tyre of a bead filler of the pneumatic tyre of Figure 1.

### PREFERRED EMBODIMENTS OF THE INVENTION

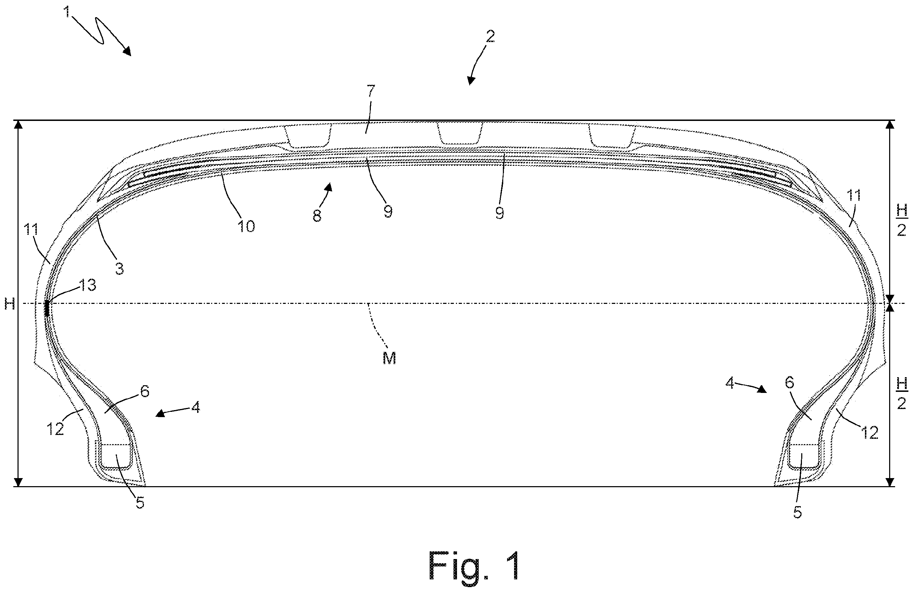

In Figure 1 a pneumatic tyre is indicated as a whole by the number 1 and comprises a toroidal carcass 2, which comprises a single body ply 3 partially folded onto itself and therefore having two lateral flaps (i.e., two layers superimposed on one another and jointly referred to as *"turn-up").* Within each flap of the body ply 3, an edge (i.e., a terminal end) of the body ply 3 rests against an intermediate portion of the body ply 3 itself.

On the opposite sides of the carcass 2, two annular beads 4 are arranged, each of which is surrounded by the body ply 3 (that is, it is surrounded by the flaps of the body ply 3), and has a bead core 5 which is reinforced with a number of windings of a metallic wire and a bead filler 6.

The carcass 2 supports an annular tread 7; between the carcass 2 and the tread 7, a tread belt 8 is interposed, which comprises two tread plies 9. Each tread ply 9 comprises a number of cords (not shown), which are embedded within a rubber belt, are arranged alongside one another with a given pitch and form an angle of inclination that is determined in relation to an equatorial plane of the pneumatic tyre 1.

Arranged within the body ply 3 is an innerliner 10, which is airtight, constitutes an inner lining and has the function of retaining the air within the pneumatic tyre 1 in order to maintain the inflation pressure of the same pneumatic tyre 1 over time.

The body ply 3 supports a pair of sidewalls 11 arranged externally to the body ply 3, between the tread 7 and the beads 4.

Finally, the body ply 3 supports a pair of abrasion gum strips 12 arranged externally below the sidewalls 11 and at the beads 4.

The pneumatic tyre 1 is manufactured according to the construction modality referred to as *"envelope,"* wherein each flap of the body ply 3 terminates below the tread ply 9 (thus, below the tread 7 in contact with the most interior tread ply 9); i.e., within each flap, an edge (i.e., a terminal end) of the body ply 3 which rests against an intermediate portion of the body ply 3 itself is located radially below the tread ply 9 (thus, below the tread 7 in contact with the most interior tread ply 9) .

According to what is illustrated in Figure 1, the transversal section of the pneumatic tyre 1 has an overall height H (a thickness, i.e., a radial dimension measured perpendicularly to the axis of rotation of the pneumatic tyre); identified in Figure 1 is the medial plane M of the height H of the transversal section of the pneumatic tyre 1 (in other words, the plane M bisects the height H of the cross section of the pneumatic tyre 1, subdividing the height H of the cross section of the pneumatic tyre 1 into two identical halves, each having a height of H/2).

A transponder 13, i.e., an electronic device (normally passive, i.e., without an electrical power supply thereof) which is capable of memorizing the information and capable of communicating by radio frequency, is integrated (embedded) within the interior of the pneumatic tyre 1, in particular at a sidewall 11 (for example, the external sidewall 11, i.e., the sidewall facing the exterior of the vehicle once the pneumatic tyre 1 has been mounted on the rim). In other words, the transponder 13 is a "smart *label"* of small dimensions which is integrated into the interior of the pneumatic tyre 1 and is suitable for responding to the remote polling by specific fixed or portable devices, called readers (or else polling devices); a reader is capable of reading and/or modifying the information contained within the transponder 13 i.e., polling whilst communicating with the transponder itself 13 in radio frequency. Accordingly, the transponder 13 is a part of a wireless reading and/or writing system that operates according to so-called RFID technology *("Radio-Frequency IDentification").*

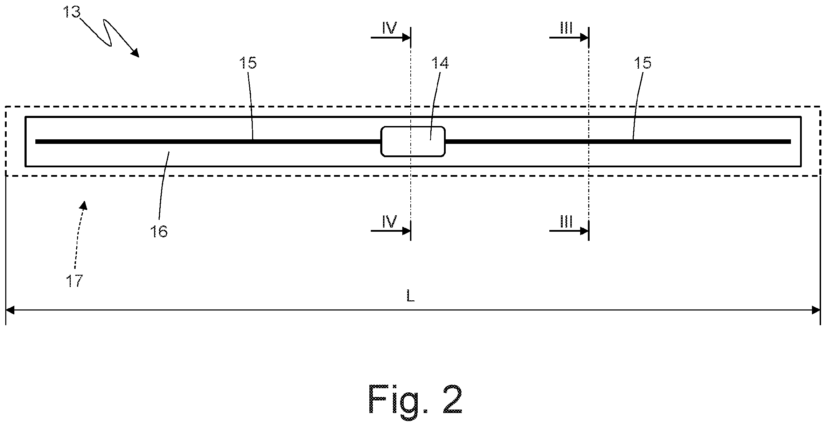

According to what is illustrated in Figure 2, the transponder 13 comprises an electronic circuit 14 (that is, a microchip) equipped with a non-volatile memory (typically, EEPROM or FRAM, the latter more costly, but technologically more advanced), an antenna 15 connected to the electronic circuit 14, and a support 16, which carries both the electronic circuit 14 and the antenna 15 and is frequently defined as a *"substrate"* (typically it is made of a thin layer of mylar, plastic like PET or PVC, or other similar materials). In the embodiment illustrated in Figure 2, the antenna 15 is a dipole antenna (or simply a dipole) and is made of two equal open arms constructed with a linear electrical conductor on which the currents flow that remotely irradiate the electromagnetic field.

In use, the antenna 15 receives an electromagnetic signal that, by electromagnetic induction, induces a difference in electrical potential in the antenna 15, which generates the circulation of an electrical current in the electronic circuit 14 to supply power to the electronic circuit 14 itself; the electronic circuit 14, thus activated, transmits the data contained within the memory thereof by means of the antenna 15 and, where appropriate, also modifies the data contained within the memory thereof.

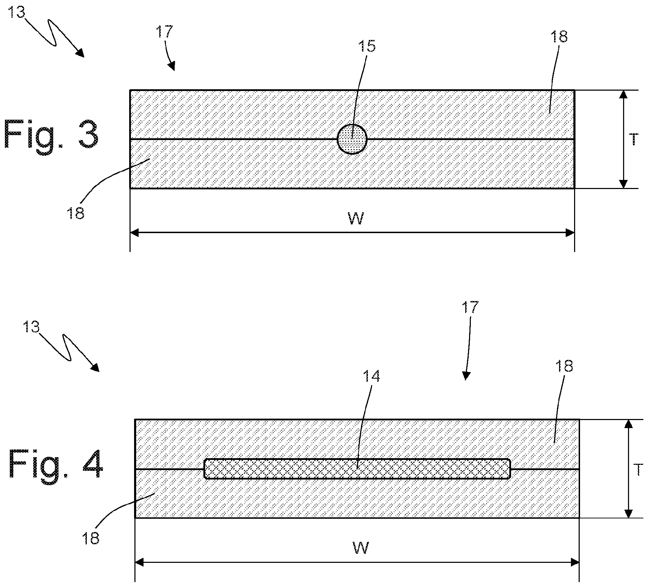

According to that illustrated in Figures 2, 3 and 4, the transponder 13 is inserted into a sleeve 17, comprising two strips 18 of green rubber superimposed and pressed one against the other (obviously, the rubber of the two rubber strips 18 is initially raw and is vulcanized together with the rest of the pneumatic tyre 1 during the final vulcanization of the pneumatic tyre 1 itself); in general, the two strips 18 of green rubber of the sleeve 17 are 1-2 mm longer/wider than the transponder 13 (i.e., than the electronic circuit 14 and the antenna 15). The two strips 18 of green rubber are initially parallelepiped and deform around the components of the transponder 13 when they are pressed one against the other around the transponder 13 itself. According to an alternative embodiment, the two strips of rubber 18 of the sleeve 17 are vulcanized from the start (that is, the rubber of the two strips 18 of rubber is vulcanized immediately) .

According to a different embodiment (not illustrated), the support 16 is absent and the function thereof is performed by the strips 18 of rubber of the sleeve 17.

According to a preferred embodiment, the thickness T of the sleeve 17 (containing the transponder 13 within the interior thereof) is overall between 0.6 and 2 mm, the width W of the sleeve 17 is approximately 8-12 mm, and the length L of the sleeve 17 is approximately 60-80 mm.

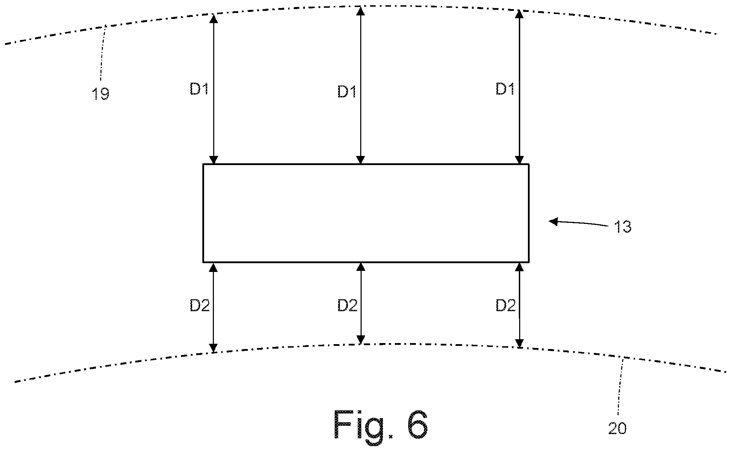

The transponder 13 is arranged circumferentially, i.e., it is arranged along a circumference centered on the axis of rotation of the pneumatic tyre; it is important to emphasize that the transponder 13 (contained within the sleeve 17) has a parallelepiped rectangular form, and therefore, within the pneumatic tyre 1, it does not follow the circular progression of all of the other components of the pneumatic tyre 1 (as schematically shown in Figure 6).

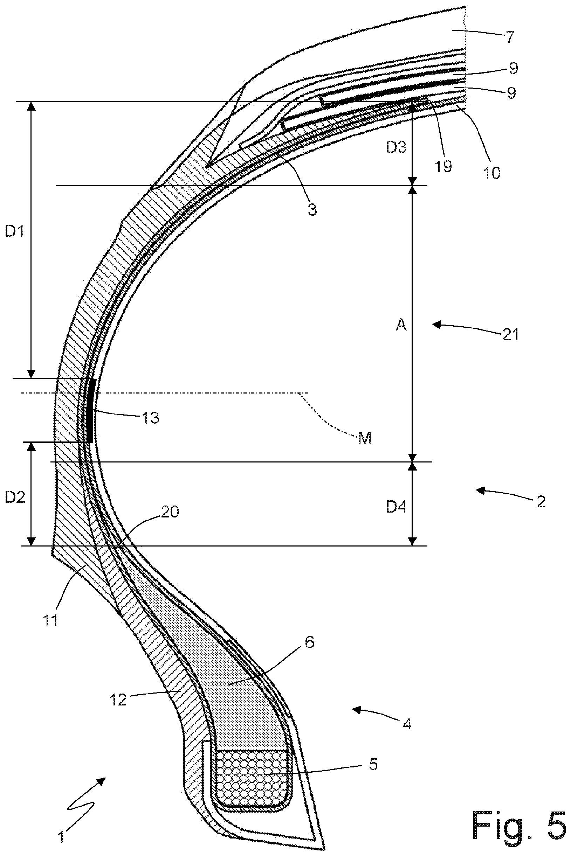

According to that shown in Figure 5, the transponder 13 (contained within the sleeve 17) is arranged at a radial distance D1 (not zero) from an edge 19 (i.e., a terminal end) of the body ply 3 (which is arranged below the tread plies 9 and, therefore, below the tread 7, in contact with the innermost tread ply 9, and rests against an intermediate portion of the body ply 3 itself); i.e., a radially external upper edge (end) of the transponder 13 is arranged at the radial distance D1 from the edge 19 of the body ply 3. Furthermore, the transponder 13 (contained within the sleeve 17) is arranged at a radial distance D2 (not zero) from an edge 20 (i.e., a terminal end) of the beads 4 (in particular an edge of the bead filler 6, whereupon the bead filler 6 terminates); i.e., a radially inner edge (end) of the transponder 13 is arranged at a radial distance D2 from the edge 20 of the bead filler 6.

More generally, the transponder 13 (inserted into the sleeve 17) is entirely contained within a band 21 which is arranged at a radial distance D3 from the edge 19 of the body ply 3 and is arranged at a radial distance D4 from edge 20 of the beads 4. The radial distance D3 between the transponder 13 and the edge 19 of the body ply 3 is greater than 7 mm (10 mm according to a preferred embodiment); similarly, the radial distance D4 between the transponder 13 and the edge 20 of the beads 4 is greater than 7 mm (10 mm according to a preferred embodiment). Consequently, the radial distance D1 between the radially external edge (end) of the transponder 13 and the edge 19 of the body ply 3 is greater than 7 mm (10 mm according to a preferred embodiment) and the radial distance D2 between the radially inner edge (end) of the transponder 13 and the edge 20 of the beads 4 (in particular of the bead filler of the bead core 6) is greater than 7 mm (10 mm according to a preferred embodiment). It is important to note that normally (but not necessarily) the radial distance D1 is different than the radial distance D2 (as shown for example in Figure 5) and therefore the transponder 13 is not arranged exactly halfway between the edge 19 of the body ply 3 and the edge 20 of the bead 4.

The transponder 13 (contained within the sleeve 17) is arranged between the body ply 3 and the innerliner 10, and therefore the transponder 13 is laterally (i.e., axially, or parallel to the axis of rotation of the pneumatic tyre 1) bordering (in direct contact with) the body ply 3 on the external side and is laterally bordering (in direct contact with) the innerliner 10 on the inner side. In other words, an external surface of the transponder 13 rests directly against (or touches) the body ply 3 and an inner surface of the transponder 13 rests directly against (or touches) the innerliner 10. The transponder 13 (contained within the sleeve 17) is arranged more to the inside of the flap of the body ply 3, and is therefore laterally (i.e., axially, or parallel to the axis of rotation of the pneumatic tyre 1) bordering the body ply 3 on one side (externally) and the innerliner 10 on the opposite side (internally); in other words, the transponder 13 is in contact externally with a corresponding portion of the body ply 3 and is in contact internally with a corresponding portion of the innerliner 10.

The transponder 13 is arranged at the flap of the body ply 3 and, therefore, in proximity to the transponder 13 it is *"doubled",* i.e., it is bent over upon itself, thereby forming a double layer.

According to a preferred embodiment, the transponder 13 is arranged within an area wherein the sidewall 11 is present and where the abrasion gum strip 12 is absent, i.e., to the side of the transponder 13 (and more externally with respect to the transponder 13) the sidewall 11 is present and the abrasion gum strip 12 is absent.

As mentioned hereinbefore, the transponder 13 is arranged circumferentially and has a parallelepiped rectangular form, and within the pneumatic tyre 1 it does not follow the circular progression of all of the other components of the pneumatic tyre 1; as a result, as shown in Figure 6, the radial distance D1 or D2 between each edge of the transponder 13 and the corresponding edge 19 or 20 is continuously variable (even if only by a maximum of 1-3 mm) along the entire extent of the transponder 13, inasmuch as the transponder 13 has a rectangular progression, while the corresponding edge 19 or 20 has a circular progression. In this respect, it is important to emphasize that the maximum (i.e., the greatest possible) radial distance D1 or D2 between each edge of the transponder 13 and the corresponding edge 19 or 20 is always greater than 7 mm (10 mm according to a preferred embodiment).

It is important to set forth that the body ply 3 could be provided with local reinforcing elements, which are applied to limited portions of the body ply 3; for example, the body ply 3 could be provided with a fabric reinforcement, which is applied in proximity to the beads 4, and/or with a calendered *"squeegee",* which is also applied close to the beads 4. In this case, such reinforcing elements become an integral part of the body ply 3, and, therefore, the transponder 13 can be arranged in contact with the body ply 3 also at such reinforcing elements.

The pneumatic tyre 1 can be the *"standard"* type or else the *"non-standard"* type; for example, the pneumatic tyre 1 could be of the *"run-flat"* type, of the *"sponge"* type (that is, provided internally with a spongy body having an acoustic effect), or of the *"sealant"* type (that is, provided with a sealing agent which is capable of closing any holes).

The embodiments described herein may be combined without departing from the scope of protection of the present invention as defined by the claims.

The pneumatic tyre 1 described above has many advantages.

First and foremost, in the aforementioned pneumatic tyre 1 the position of the transponder 13 makes it possible to minimize the stresses and deformations to which the transponder 13 is subjected (both during the construction of the pneumatic tyre 1 and during the use of the pneumatic tyre 1) and, at the same time, makes it possible to minimize transponder 13 radio frequency communications disturbances and interference (in this way, the transponder 13 can be read at a distance of over 3 meters if the pneumatic tyre 1 is not mounted on a metallic rim and at a distance of over 2 meters if the pneumatic tyre 1 is mounted on a metallic rim).

Furthermore, in the pneumatic tyre 1 described above the presence of the transponder 13 (which is nevertheless a *"foreign object"* immersed within the pneumatic tyre 1) does not have a negative impact upon the performance and the durability (or upon the operating life) of the pneumatic tyre 1 itself.

The transponder 13 is very well protected from the outside insofar as it is located more internally with respect to the body ply 3. Furthermore, local deformations to the body ply 3 are avoided and the risk of trapping air within the body ply 3 is completely avoided at the transponder 13, because the space for housing the transponder 13 is located externally with respect to the body ply 3 (by means of a bulge towards the inside of the innerliner 10).

Finally, the construction of the pneumatic tyre 1 described above is simple insofar as the transponder 13 can easily be made to adhere to the body ply 3 when the body ply 3 is still completely flat (i.e., before winding of the body ply 3 around the molding drum), or else the transponder 1 can easily be made to adhere to the innerliner 10 prior to mounting the innerliner 10 itself.

### LIST OF REFERENCE NUMBERS IN THE FIGURES

- 1: pneumatic tyre
- 2: carcass
- 3: body ply
- 4: beads
- 5: bead core
- 6: bead filler
- 7: tread
- 8: tread belt
- 9: tread plies
- 10: innerliner
- 11: sidewalls
- 12: abrasion gum strips
- 13: transponder
- 14: electronic circuit
- 15: antenna
- 16: support
- 17: sleeve
- 18: strips
- 19: edge
- 20: edge
- 21: band
- H: height
- L: length
- W: width
- T: thickness
- A: amplitude
- D1: distance
- D2: distance
- D3: distance
- D4: distance

## Claims

1. A pneumatic tyre (1) comprising:
a toroidal carcass (2), which consists of a body ply (3) that is partially folded onto itself and therefore having two lateral flaps, within each of which an edge (19) of the body ply (3) rests against an intermediate portion of the body ply (3) itself;
two annular beads (4), each of which is surrounded by the body ply (3) and has a bead core (5) and a bead filler (6);
an annular tread (7);
a tread belt (8) comprising at least one tread ply (9);
a pair of sidewalls (11) arranged externally to the body ply (3) between the tread (7) and the beads (4);
a pair of abrasion gum strips (12) arranged externally to the body ply (3), radially more to the inside of the sidewalls (11), and at the beads (4);
an innerliner (10) which is impermeable to air and is arranged within the body ply (3); and
a transponder (13) which is arranged in contact with the body ply (3) at a flap of the body ply (3), the pneumatic tire being **characterized in that** the transponder is entirely located between the edge (19) of the body ply (3) and an edge (20) of the bead filler (6), in such a way that a radially outer end of the transponder (13) is arranged radially more to the inside of the edge (19) of the body ply (3) and a radially inner end of the transponder (13) is arranged radially more to the external of the edge (20) of the bead filler (6);
wherein each flap of the body ply (3) terminates radially below the tread ply (9) in such a way that within each flap of the body ply (3) the edge (19) of the body ply (3) is below the tread ply (9);
wherein
the transponder (13) is arranged between the body ply (3) and the innerliner (10) and therefore the transponder (13) is laterally bordering and in direct contact with the body ply (3) on the external side and is laterally bordering and in direct contact with the innerliner (10) on the inner side;
a first radial distance (D1) greater than 7 mm is provided between the radially external end of the transponder (13) and the edge (19) of the body ply (3); and
a second radial distance (D2) greater than 7 mm is provided between the radially internal end of the transponder (13) and the edge (20) of the bead filler (6).

2. The pneumatic tyre (1) according to claim 1, wherein the first radial distance (D1) is greater than 10 mm.

3. The pneumatic tyre (1) according to claim 1 or 2, wherein the second radial distance (D2) is greater than 10 mm.

4. The pneumatic tyre (1) according to claim 1, 2 or 3, wherein the transponder (13) is inserted within a sleeve (17) consisting of two strips (18) of rubber superimposed and pressed one against the other.

5. The pneumatic tyre (1) according to claim 4, wherein the two strips (18) of rubber of the sleeve (17) are 1-2 mm longer and wider than the transponder (13).

6. The pneumatic tyre (1) according to claim 4 or 5, wherein a thickness (T) of the sleeve (17) is between 0.6 and 2 mm.

7. The pneumatic tyre (1) according to one of the claims from 1 to 6, wherein the transponder (13) is arranged circumferentially.

8. The pneumatic tyre (1) according to claim 7, wherein the transponder (13) has a rectilinear form and therefore within the pneumatic tyre (1) it does not follow the circular progression of all of the other components of the pneumatic tyre (1).

9. The pneumatic tyre (1) according to one of the claims from 1 to 8, wherein the transponder (13) is arranged within a zone wherein the sidewall (11) is present and the abrasion gum strip (12) is absent.

## Patentansprüche

1. Luftreifen (1), umfassend:
eine toroidale Karkasse (2), die aus einer Körperlage (3) besteht, die teilweise auf sich selbst gefaltet ist und daher zwei Seitenlaschen aufweist, innerhalb derer jeweils eine Kante (19) der Körperlage (3) an einem Zwischenabschnitt der Körperlage (3) selbst anliegt;
zwei ringförmige Wülste (4), die jeweils von der Körperlage (3) umgeben sind und einen Wulstkern (5) und einen Wulstfüller (6) aufweisen;
eine ringförmige Lauffläche (7);
einen Laufflächengürtel (8), der mindestens eine Laufflächenlage (9) umfasst;
ein Paar Seitenwände (11), die außerhalb zu der Körperlage (3) zwischen der Lauffläche (7) und den Wülsten (4) angeordnet sind;
ein Paar Abriebgummistreifen (12), die außerhalb zu der Körperlage (3), radial weiter innen an den Seitenwänden (11) und an den Wülsten (4) angeordnet sind;
einen Innerliner (10), der luftundurchlässig ist und innerhalb der Körperlage (3) angeordnet ist; und
einen Transponder (13), der in Kontakt mit der Körperlage (3) an einer Lasche der Körperlage (3) angeordnet ist,
wobei der Luftreifen **dadurch gekennzeichnet ist, dass** der Transponder sich vollständig zwischen der Kante (19) der Körperlage (3) und einer Kante (20) des Wulstfüllers (6) befindet, derart, dass ein radial äußeres Ende des Transponders (13) radial weiter innen von der Kante (19) der Körperlage (3) angeordnet ist und ein radial inneres Ende des Transponders (13) radial weiter außerhalb der Kante (20) des Wulstfüllers (6) angeordnet ist;
wobei jede Lasche der Körperlage (3) radial unterhalb der Laufflächenlage (9) derart endet, dass innerhalb jeder Lasche der Körperlage (3) die Kante (19) der Körperlage (3) unterhalb der Laufflächenlage (9) liegt;
wobei der Transponder (13) zwischen der Körperlage (3) und dem Innerliner (10) angeordnet ist und daher der Transponder (13) auf der Außenseite seitlich an die Körperlage (3) angrenzt und in direktem Kontakt mit dieser ist und auf der Innenseite seitlich an den Innerliner (10) angrenzt und in direktem Kontakt mit diesem ist;
ein erster radialer Abstand (D1) größer als 7 mm zwischen dem radial äußeren Ende des Transponders (13) und der Kante (19) der Körperlage (3) vorgesehen ist; und ein zweiter radialer Abstand (D2) größer als 7 mm zwischen dem radial inneren Ende des Transponders (13) und der Kante (20) des Wulstfüllers (6) vorgesehen ist.

2. Luftreifen (1) nach Anspruch 1, wobei der erste radiale Abstand (D1) größer als 10 mm ist.

3. Luftreifen (1) nach Anspruch 1 oder 2, wobei der zweite radiale Abstand (D2) größer als 10 mm ist.

4. Luftreifen (1) nach Anspruch 1, 2 oder 3, wobei der Transponder (13) innerhalb einer Hülse (17) eingesetzt ist, die aus zwei Streifen (18) aus Gummi besteht, die übereinandergelegt und gegeneinandergepresst sind.

5. Luftreifen (1) nach Anspruch 4, wobei die beiden Gummistreifen (18) der Hülse (17) 1-2 mm länger und breiter als der Transponder (13) sind.

6. Luftreifen (1) nach Anspruch 4 oder 5, wobei eine Dicke (T) der Hülse (17) zwischen 0,6 und 2 mm liegt.

7. Luftreifen (1) nach einem der Ansprüche 1 bis 6, wobei der Transponder (13) in Umfangsrichtung angeordnet ist.

8. Luftreifen (1) nach Anspruch 7, wobei der Transponder (13) eine geradlinige Form aufweist und daher innerhalb des Luftreifens (1) nicht dem kreisförmigen Verlauf aller anderen Komponenten des Luftreifens (1) folgt.

9. Luftreifen (1) nach einem der Ansprüche 1 bis 8, wobei der Transponder (13) innerhalb einer Zone angeordnet ist, wobei die Seitenwand (11) vorhanden ist und der Abriebgummistreifen (12) nicht vorhanden ist.

## Revendications

1. Bandage pneumatique (1) comprenant :
une carcasse toroïdale (2) qui se compose d'une nappe de carcasse (3) qui est partiellement pliée sur elle-même et ayant par conséquent deux rabats latéraux, à l'intérieur de chacun desquels un bord (19) de la nappe de carcasse (3) s'appuie contre une partie intermédiaire de la nappe de carcasse (3) elle-même ;
deux talons annulaires (4) dont chacun est entouré par la nappe de carcasse (3) et a une tringle (5) et un bourrage sur tringle (6) ;
une bande de roulement annulaire (7) ;
une ceinture de bande de roulement (8) comprenant au moins une nappe de bande de roulement (9) ;
une paire de parois latérales (11) agencées à l'extérieur de la nappe de carcasse (3) entre la bande de roulement (7) et les talons (4) ;
une paire de bandes anti-abrasives (12) agencées extérieurement par rapport à la nappe de carcasse (3), radialement plus à l'intérieur des parois latérales (11), et au niveau des talons (4) ;
un calandrage intérieur (10) qui est imperméable à l'air et est agencé à l'intérieur de la nappe de carcasse (3) ; et
un transpondeur (13) qui est agencé en contact avec la nappe de carcasse (3) au niveau d'un rabat de la nappe de carcasse (3), le bandage pneumatique étant **caractérisé en ce que** le transpondeur est entièrement positionné entre le bord (19) de la nappe de carcasse (3) et un bord (20) du bourrage sur tringle (6), de sorte qu'une extrémité radialement externe du transpondeur (13) est agencée radialement plus vers l'intérieur du bord (19) de la nappe de carcasse (3) et une extrémité radialement interne du transpondeur (13) est agencée radialement plus vers l'extérieur du bord (20) du bourrage sur tringle (6) ;
dans lequel chaque rabat de la nappe de carcasse (3) se termine radialement au-dessous de nappe de bande de roulement (9) de sorte que, à l'intérieur de chaque rabat de la nappe de carcasse (3), le bord (19) de la nappe de carcasse (3) est au-dessous de la nappe de bande de roulement (9) ;
dans lequel :
le transpondeur (13) est agencé entre la nappe de carcasse (3) et le calandrage intérieur (10) et par conséquent le transpondeur (13) borde latéralement et est en contact direct avec la nappe de carcasse (3) sur le côté externe et borde latéralement et est en contact direct avec le calandrage intérieur (10) sur le côté interne ;
une première distale radiale (D1) supérieure à 7 mm est prévue entre l'extrémité radialement externe du transpondeur (13) et le bord (19) de la nappe de carcasse (3) ; et
une seconde distance radiale (D2) supérieure à 7 mm est prévue entre l'extrémité radialement interne du transpondeur (13) et le bord (20) du bourrage sur tringle (6) .

2. Bandage pneumatique (1) selon la revendication 1, dans lequel la première distance radiale (D1) est supérieure à 10 mm.

3. Bandage pneumatique (1) selon la revendication 1 ou 2, dans lequel la seconde distance radiale (D2) est supérieure à 10 mm.

4. Bandage pneumatique (1) selon la revendication 1, 2 ou 3, dans lequel le transpondeur (13) est inséré à l'intérieur d'un manchon (17) se composant de deux bandes (18) de caoutchouc superposées et comprimées l'une contre l'autre.

5. Bandage pneumatique (1) selon la revendication 4, dans lequel les deux bandes (18) de caoutchouc du manchon (17) ont une longueur et une largeur supérieures de 1 à 2 mm par rapport à celles du transpondeur (13).

6. Bandage pneumatique (1) selon la revendication 4 ou 5, dans lequel une épaisseur (T) du manchon (17) est comprise entre 0,6 et 2 mm.

7. Bandage pneumatique (1) selon l'une des revendications 1 à 6, dans lequel le transpondeur (13) est agencé de manière circonférentielle.

8. Bandage pneumatique (1) selon la revendication 7, dans lequel le transpondeur (13) a une forme rectiligne et par conséquent, à l'intérieur du bandage pneumatique (1), il ne suit pas la progression circulaire de la totalité des autres composants du bandage pneumatique (1).

9. Bandage pneumatique (1) selon l'une des revendications 1 à 8, dans lequel le transpondeur (13) est agencé dans une zone dans laquelle la paroi latérale (11) est présente et la bande anti-abrasive (12) est absente.
